# EUROPÄISCHE PATENTSCHRIFT

(11) **EP 3 273 314 B1**
(45) Veröffentlichungstag und Bekanntmachung des Hinweises auf die Patenterteilung: **30.08.2023**
(21) Anmeldenummer: 16180149.3
(22) Anmeldetag: 19.07.2016
(51) Int. Cl.: G05B 19/042

(54) **SPEICHERPROGRAMMIERBARE STEUERUNG MIT MANAGEMENTSYSTEM**
PROGRAMMABLE LOGIC CONTROLLER WITH MANAGEMENT SYSTEM
COMMANDE PROGRAMMABLE COMPORTANT UN SYSTÈME DE GESTION

(43) Veröffentlichungstag der Anmeldung: 24.01.2018
(73) Patentinhaber: ABB Schweiz AG, 5400 Baden (CH)
(72) Erfinder: Sehestedt, Stephan, 68165 Mannheim (DE); Hauck-Stattelmann, Stefan, 68789 St.Leon-Rot (DE); Harding, Jeffrey, Holly Springs NC 27540 (US); Koziolek, Heiko, 76227 Karlsruhe (DE)
(74) Vertreter: Maiwald GmbH

(56) Entgegenhaltungen:
- EP-A1- 2 506 098
- EP-A1- 2 884 392
- WO-A1-2011/150929
- US-A1- 2009 132 057
- US-A1- 2013 339 976
- Anonymous: "TenAsys Real-time Hypervisor", , 1. August 2006 (2006-08-01), Seiten 1-11, XP055018231, Gefunden im Internet: URL:http://www.tenasys.com/support/files/T enAsysReal-timeHypervisorBackgrounder.pdf [gefunden am 2012-02-02]
- Anonymous: "Sandbox (computer security) - Wikipedia", , 5. Juli 2016 (2016-07-05), XP055339894, Gefunden im Internet: URL:https://en.wikipedia.org/w/index.php?t itle=Sandbox_(computer_security)&oldid=728 401459 [gefunden am 2017-01-27]
- DAHLL G ET AL: "Software diversity: Way to enhance safety?", INFORMATION AND SOFTWARE TECHNOLOGY, ELSEVIER, AMSTERDAM, NL, vol. 32, no. 10, 1 December 1990 (1990-12-01), pages 677-685, XP024242700, ISSN: 0950-5849, DOI: 10.1016/0950-5849(90)90100-6 [retrieved on 1990-12-01]

## Beschreibung

Die Erfindung betrifft speicherprogrammierbare Steuerungen für die Ansteuerung von Feldgeräten in verteilten Steuersystemen für Industrieanlagen.

### Stand der Technik

Viele Industrieanlagen werden durch verteilte Steuerungssysteme (distributed control systems, DCS) gesteuert. Grundbaustein derartiger Steuerungssysteme sind speicherprogrammierbare Steuerungen (SPS, bzw. englisch "programmable logic controllers", PLC).

Eine übliche SPS umfasst eine Hardwareplattform und eine genau auf diese Hardwareplattform abgestimmte Steuersoftware. Die Steuersoftware wird in einer hardwarenah programmierten Ausführungsumgebung auf der Hardware ausgeführt. Über Kommunikationsressourcen der Hardwareplattform ist die SPS horizontal mit anderen SPS sowie vertikal mit angesteuerten Feldgeräten sowie übergeordneten Steuersystemen verbunden.

Die Steuersoftware ist in der Regel spezifisch für eine bestimmte Hardwareplattform und die hierauf laufende Ausführungsumgebung. Daher muss bei einem Wechsel der SPS die Steuersoftware angepasst werden. Dies kann sogar dann erforderlich sein, wenn die Steuersoftware gemäß einem Standard (etwa IEC 61131-3) programmiert wurde und sowohl die alte als auch die neue SPS diesen Standard unterstützen, da die derzeitigen Standards nicht alle Details des Ausführungsverhaltens verbindlich festschreiben.

Wird nun beispielsweise die Industrieanlage um einen neuen Anlagenteil vergrößert, der die gleiche Funktionalität aufweist wie ein bestehender Anlagenteil, so ist auch der neue Anlagenteil in das Steuerungssystem einzubinden. Wenn hierbei die Vorgabe ist, dass die kundenspezifischen Steuersoftware unangetastet bleiben soll, ist es auf Grund der engen Bindung der Steuersoftware an die SPS nur sehr eingeschränkt möglich, bestehende SPS durch leistungsfähigere zu ersetzen. Meist muss die Erweiterung mit zusätzlichen SPSen des gleichen Typs vorgenommen werden. Auch das Nachrüsten neuer Funktionen ist nur schwierig möglich. Der Einbau zusätzlicher SPSen in ein bestehendes Steuerungssystem kann wiederum an Platzmangel in bestehenden Schaltschränken scheitern.

Aus der EP 2 506 098 A1 ist bekannt, die Steuersoftware innerhalb der SPS auf einer virtuellen Maschine auszuführen, so dass ein und dieselbe Steuersoftware auf verschiedenen Typen von SPS ausgeführt werden kann. Auf ein und derselben SPS können mehrere dieser virtuellen Maschinen gleichzeitig ausgeführt werden. Aus der WO 2015/124 320 A1 ist eine weitere dynamische SPS bekannt, auf der mehrere verschiedene Steuerprogramme gleichzeitig ausgeführt werden können. Somit kann einer SPS durch die Hinzufügen eines weiteren Steuerprogramms zusätzliche Funktionalität verliehen werden.

Beim dauerhaften Produktiveinsatz derartiger Lösungen besteht grundsätzlich die Schwierigkeit, dass die störungsfreie Ausführung eines Steuerprogramms auch vom Wohlverhalten der anderen gleichzeitig laufenden Steuerprogramme abhängt.

WO 2011/150 929 A1 offenbart ein Steuerungssystem für Windkraftanlagen, in dem auf ein und derselben Hardwareplattform unter der Kontrolle eines Hypervisors mehrere Steuerungsprogramme unter unabhängigen Betriebssystemen laufen.

US 2013/339 976 A1 offenbart ein Verfahren zur Aufteilung der Ressourcen einer Hardwareplattform, die eine Vielzahl von Prozessoren umfasst, auf mehrere Betriebssysteme, unter denen wiederum verschiedene Steuerprogramme für ein Automatisierungssystem laufen.

EP 2 884 392 A1 offenbart ein Verfahren zum Betreiben einer Steuerungssoftware auf einer Hardwareplattform, bei dem drei identische Kopien der Steuerungssoftware in verschiedenen virtuellen Maschinen auf der Hardwareplattform ausgeführt und die von diesen Kopien jeweils gelieferten Arbeitsergebnisse gegeneinander plausibilisiert werden.

### Aufgabe und Lösung

Es ist die Aufgabe der Erfindung, die Ausführung von Steuersoftware auf einer Hardwareplattform einer speicherprogrammierbaren Steuerung besser gegen Fehler abzusichern.

Diese Aufgabe wird erfindungsgemäß gelöst durch eine speicherprogrammierbare Steuerung gemäß Hauptanspruch sowie durch ein zugehöriges Computerprogrammprodukt. Weitere vorteilhafte Ausgestaltungen ergeben sich aus den darauf rückbezogenen Unteransprüchen.

### Gegenstand der Erfindung

Im Rahmen der Erfindung wurde eine speicherprogrammierbare Steuerung (SPS) für mindestens ein Feldgerät in einer Industrieanlage entwickelt. Diese SPS umfasst ein Betriebssystem, welches wiederum dazu ausgebildet ist, mindestens eine Ausführungsumgebung, innerhalb derer eine die Steuerlogik der speicherprogrammierbaren Steuerung beinhaltende Steuersoftware lauffähig ist, in mindestens einem Prozess auszuführen.

Erfindungsgemäß ist zusätzlich ein übergeordnetes Managementsystem vorgesehen. Dieses Managementsystem ist dazu ausgebildet, unmittelbar auf dem Betriebssystem zu laufen und eine oder mehrere Ausführungsumgebungen jeweils in einer eigenen Sandbox auszuführen. Das Managementsystem umfasst einen Ressourcenmanager, der dazu ausgebildet ist, einer jeden Sandbox den Zugriff auf Arbeitsspeicher, Prozessorleistung und Kommunikationsressourcen der Hardwareplattform zuzuteilen.

Der Ressourcenmanager bewirkt, dass die störungsfreie Ausführung einer Instanz von Steuersoftware nun nicht mehr vom Wohlverhalten anderer gleichzeitig laufender Steuerprogramme abhängt. Stattdessen verfügt die Steuersoftware über planbare Ressourcen, so als würde sie alleine auf einer entsprechend dimensionierten Hardwareplattform laufen. Der Ressourcenmanager vervollständigt somit die Unabhängigkeit der Sandboxes voneinander sowie den Schutz der Sandboxes vor gegenseitiger Beeinflussung.

Dabei kann das Betriebssystem der SPS insbesondere ein echtzeitfähiges Betriebssystem sein. Der Ressourcenmanager hat dann die Wirkung, dass noch eine Garantie für Reaktionszeiten gegeben werden kann, obwohl mehrere Instanzen von Steuersoftware gleichzeitig laufen.

Durch den Ressourcenmanager kann eine bestehende SPS in mehrerlei Hinsicht additiv, d.h. ohne Beeinträchtigung der vorhandenen Funktionalität, erweitert werden.

Zum Einen kann mit einer weiteren Instanz der bestehenden Steuersoftware die Steuerfunktionalität der SPS auf weitere gleichartige Feldgeräte ausgedehnt werden, etwa wenn die Industrieanlage um einen neuen funktionsgleichen Anlagenteil erweitert wird. Die Leistungsfähigkeit der Hardwareplattform von SPS wird in der Regel für eine bestimmte Komplexität der Steuersoftware dimensioniert, wobei auch großzügig berücksichtigt wird, dass eine spätere Aufrüstung der Hardware meist nicht möglich ist. Somit ist in vielen Industrieanlagen die Hardware der SPS für die tatsächlich von der Steuersoftware angeforderte Leistung überdimensioniert. Die Erfindung ermöglicht es also, derartige Freikapazitäten zu nutzen. Statt also weitere SPS zu beschaffen, kann zuerst das in der bestehenden Hardware gebundene tote Kapital aktiviert werden.

Zum Anderen können der SPS auch mit deutlich weniger Aufwand völlig neue Funktionen hinzugefügt werden. Bislang war dies selbst dann schwierig, wenn ohne Wechsel der Hardware "nur" die neuen Funktionen in die Steuersoftware eingepflegt werden sollten. Jegliche Änderung kann eine Validierung oder ähnliche Prüfung der Steuersoftware pauschal ungültig machen, analog dem Bruch eines Garantiesiegels beim Öffnen eines Gerätegehäuses. Die Prüfung muss mit entsprechendem Arbeitsaufwand neu abgenommen werden. Dies ist auch nicht unbegründet, denn in der Softwaretechnik sind viele Fälle bekannt, in denen eine gewollte Verbesserung an einer Stelle überraschenderweise zu einer Beeinträchtigung der Funktionalität an anderer Stelle führte. Je komplexer die Steuersoftware ist, desto schwieriger sind derartige Wechselwirkungen zu überblicken. Wird hingegen die zusätzliche Funktionalität in eine weitere Instanz von Steuersoftware ausgelagert, so ist durch das Sandboxing der Instanzen gegeneinander sichergestellt, dass die bestehende Funktionalität nicht beeinträchtigt wird. Es ist also nur der neu hinzugefügte Programmcode zu testen.

Weiterhin wird auf diese Weise auch die Schwierigkeit umschifft, dass eine monolithische Steuersoftware nicht beliebig wachsen kann, weil die Architektur der Hardwareplattformen für SPS typischerweise die Komplexität der darauf ausführbaren Software einschränkt. So kann etwa eine Grenze für die maximal zulässige Programmgröße durch die Aufteilung auf zwei Instanzen umgangen werden.

Schließlich können dank des Managementsystems Fertigungsstraßen im Sinne von "Industrie 4.0" flexibel gestaltet werden. Da nun über das Managementsystem festgelegt werden kann, welche Steuersoftware im Einzelnen auf der SPS läuft, kann die SPS insgesamt zur Laufzeit zu einer ganz anderen Funktion und zur Ansteuerung ganz anderer Feldgeräte umkonfiguriert werden als ursprünglich geplant. Nach dem bisherigen Stand der Technik wären hierfür zusätzliche SPS sowie eine Möglichkeit zum Umschalten zwischen SPS, für die es am Markt aktuell keine Lösung zu kaufen gibt, erforderlich gewesen.

Somit ist es vorteilhaft, eine neue SPS bereits ab Werk mit dem Managementsystem auszuliefern, auch wenn noch keine parallele Ausführung mehrerer Instanzen von Steuersoftware beabsichtigt ist. Das Managementsystem kann aber auch nachträglich in Form von Software nachgerüstet werden und ist insofern ein eigenständig verkaufbares Produkt.

Die Zuteilung der Ressourcen kann beispielsweise bei der Einrichtung (Engineering) der SPS statisch festgelegt werden. Für eine manuelle Festlegung kann der Anwender beispielsweise seine Erfahrung oder auch Testergebnisse heranziehen. Die Zuteilung kann aber auch beispielsweise bei der Initialisierung beim Systemstart oder später zur Laufzeit der SPS festgelegt und/oder dynamisch angepasst werden. Für die Zuteilung können auch statische oder dynamische Analysen der Steuerungssoftware, die Aufschluss über den Ressourcenbedarf geben, herangezogen werden.

Für die Abschottung (Sandboxing) der Sandboxes gegeneinander können alle Mittel eingesetzt werden, die das Betriebssystem und/oder die Hardwareplattform zu diesem Zweck bereitstellen. Beispielsweise kann eine Memory Management Unit (MMU) der Hardwareplattform die Bereiche des Arbeitsspeichers, die den einzelnen Sandboxes zugeteilt sind, untereinander abschotten. Weiterhin können die Funktionen des Betriebssystems für eine Abschottung der Prozesse untereinander verwendet werden, wie etwa das Konzept, dass jeder Prozess nur Zugriff auf sich selbst und seine Unterprozesse hat. Schließlich können auch Funktionen des Betriebssystems für die Überwachung und Durchsetzung der Ressourcenzuteilung, wie beispielsweise die "ulimits" unixoider Betriebssysteme oder Software Container, herangezogen werden.

Das Managementsystem weist einen Redundanzmanager auf, der dazu ausgebildet ist, die im Verhältnis zum Feldgerät vorgesehene Funktionalität der Steuerung aus mehreren redundanten Instanzen von Steuersoftware abzurufen und bereitzustellen. Auf diese Weise kann eine Redundanz insbesondere als reine Softwarelösung nachgerüstet werden, ohne Änderung der bestehenden Steuersoftware. Dies gilt auch dann, wenn bei der Entwicklung der ursprünglichen Steuersoftware eine Redundanz überhaupt nicht in Betracht gezogen wurde.

Der Redundanzmanager muss jedoch nicht zwingend rein in Software implementiert sein. Der Redundanzmanager, wie auch andere Teile des Managementsystems, können auch ganz oder teilweise in Hardware implementiert sein. Dies kann beispielsweise die Performance steigern um den Preis, dass das Managementsystem schwerer auf andere Hardwareplattformen portierbar ist.

Die Integration des Redundanzmanagers in das Managementsystem ermöglicht es insbesondere, bei der Ersteinrichtung (Engineering) der SPS oder auch zur Laufzeit über eine Konfigurationsschnittstelle der SPS das Redundanzniveau für jede Ausführungsumgebung und jede Instanz der Steuersoftware individuell festzulegen, unabhängig davon, ob eine mögliche Bereitstellung von Redundanz in der eigentlichen Konfigurationsroutine der Steuersoftware implementiert ist.

Durch die Bereitstellung von Redundanz kann beispielsweise ein geforderter Sicherheits-Integritäts-Level (SIL) mit geringerem Aufwand erreicht werden. Beispielsweise lässt sich SIL3 durch die Kombination einer ersten Sandbox mit SIL1-konformer Software und einer zweiten Sandbox mit SIL2-konformer Software erreichen.

Der Redundanzmanager ist dazu ausgebildet, Dateneingaben vom Feldgerät an mehrere Instanzen von Steuersoftware weiterzuleiten und die daraufhin von diesen Instanzen generierten Datenausgaben gegeneinander zu plausibilisieren. Liefern dann beispielsweise zwei Instanzen Datenausgaben, die zumindest in groben Zügen übereinstimmen, während die Ausgabe einer dritten Instanz hiervon deutlich abweicht, arbeitet die dritte Instanz möglicherweise fehlerhaft. Beispielsweise kann im für die dritte Instanz zuständigen Teil des Arbeitsspeichers ein einzelnes Bit umgekippt sein und dafür sorgen, dass vom Feldgerät gelieferte Zahlenwerte für einen Druck in der Maßeinheit "pounds per square inch" (psi) statt richtigerweise "bar" interpretiert werden. Die daraufhin von der dritten Instanz generierten Ausgaben werden dann systematisch von den Ausgaben der beiden anderen Instanzen abweichen. Die Instanzen der Steuersoftware, die ein und dieselbe Funktionalität der Steuerung bereitstellen, sind nach unterschiedlichen Konzepten programmiert.

Der Redundanzmanager ist dazu ausgebildet, die Funktion mehrerer Instanzen von Steuersoftware fortlaufend zu überwachen und bei Ausfall oder Fehlfunktion einer Instanz diese Instanz, und/oder ihre Ausführungsumgebung, neu zu starten. Beispielsweise kann ein Programmierfehler in der Steuersoftware dazu führen, dass in bestimmten Situationen reservierter Arbeitsspeicher nach Gebrauch nicht wieder freigegeben wird (Speicherleck), so dass irgendwann der zur Verfügung stehende Arbeitsspeicher komplett aufgebraucht ist. Ein durch den Redundanzmanager veranlasster Neustart der Steuersoftware beseitigt dann zwar nicht die Ursache des Problems, aber die neue Sandbox fängt wieder mit einem "sauberen" Arbeitsspeicher an, so dass das Problem zumindest provisorisch gelindert ist. Weiterhin wird auf diese Weise der Anlagenbetreiber auf das Problem aufmerksam gemacht und kann ihm programmtechnisch auf den Grund gehen.

Der Redundanzmanager kann beispielsweise auch vorteilhaft dazu ausgebildet sein, mindestens eine zusätzliche Instanz unter einer zusätzlichen Ausführungsumgebung in einer weiteren Sandbox zu aktivieren

Der Redundanzmanager kann beispielsweise auch vorteilhaft dazu ausgebildet sein, die Kommunikation mehrerer Instanzen von Steuersoftware mit dem Feldgerät nach einem Rundlaufverfahren (Round-Robin) zu steuern. Es werden dann alle Instanzen gleichmäßig ausgelastet. Bleibt eine turnusmäßig angesprochene Instanz die Antwort für eine vorgegebene Zeitspanne (Timeout) schuldig, so kann diese Instanz als fehlerhaft arbeitend erkannt werden.

In einer weiteren besonders vorteilhaften Ausgestaltung der Erfindung sind zur Bereitstellung ein und derselben Funktionalität der SPS zwei inhaltlich verschiedene

Ausführungsumgebungen, und/oder zwei inhaltlich verschiedene Instanzen von Steuersoftware, vorgesehen. Insbesondere im redundanten Betrieb lässt sich hiermit die Betriebssicherheit weiter erhöhen. Hierhinter steckt der Gedanke, dass es unwahrscheinlich ist, dass beispielsweise zwei von verschiedenen Entwicklern nach unterschiedlichen Konzepten programmierte Instanzen der Steuersoftware jeweils Fehler aufweisen, die sich genau in der gleichen Betriebssituation in gleicher Weise auswirken.

Es können aber beispielsweise auch mehrere Instanzen von Steuersoftware gleichzeitig ausgeführt werden, um eine in Entwicklung befindliche oder neu erworbene neue Version der Steuersoftware zu testen, ohne dass hierfür der laufende Betrieb der bisherigen Version unterbrochen und der damit gesteuerte industrielle Prozess angehalten werden muss. Weiterhin kann bei einer Erweiterung der Funktionalität eine Instanz der bisherigen Steuersoftware gemeinsam mit einer weiteren Instanz, die nur die zusätzlich hinzugefügten Funktionen enthält, ausgeführt werden.

Schließlich ist es beispielsweise auch möglich, für verschiedene Typen von SPS geschriebene Steuerprogramme unter verschiedenen Ausführungsumgebungen auf ein und derselben physischen SPS, oder beispielsweise auf einem Server mit entsprechenden Kommunikationsschnittstellen, konsolidiert werden. Der Server kann dann wirkungsgleich mit der jeweils nachgebildeten SPS sein. Prinzipiell können auch verschiedene Ausführungsumgebungen für verschiedene Kunden, zwischen denen kein Vertrauensverhältnis besteht, auf ein und demselben Server konsolidiert sein. Die Funktionalität des Managementsystems zur Abschottung der Sandboxes untereinander kann dann beispielsweise noch um Sicherheitsfunktionen zum Schutz gegen gewollte Übergriffe zwischen Sandboxes erweitert sein.

Gemäß der Erfindung enthalten die Sandboxen jeweils eine Abstraktionsschicht, die auf von der Ausführungsumgebung ausgehende Systemaufrufe in gleicher Weise reagiert wie das Betriebssystem und/oder die Hardware eines Steuergeräts, für das die Ausführungsumgebung, und/oder die zugehörige Steuersoftware, entwickelt wurde. Beispielsweise können die von der werksseitig mit der SPS mitgelieferten Steuersoftware ausgehenden Systemaufrufe auf diese Weise vom Betriebssystem und/oder von der Hardwareplattform abstrahiert sein, so dass Programmcode in höherem Maße auf anderen Hardwareplattformen wiederverwendet werden kann. Es kann aber auch beispielsweise eine Umgebung bereitgestellt werden, in der eine für ein Steuergerät eines anderen, inkompatiblen Typs entwickelte Steuersoftware auf der SPS lauffähig gemacht wird. Auf diese Weise kann beispielsweise eine vorhandene Steuersoftware auf eine neue SPS mit einer neuen Hardwareplattform migriert werden, ohne dass die Steuersoftware hierfür verändert werden muss.

Die Sandboxen sind nicht als virtuelle Maschinen ausgebildet. Die Ausführungsumgebungen laufen vermittelt durch Abstraktionsschichten als normale Prozesse auf dem Betriebssystem. Die Abstraktionsschichten stellen jeweils eine Laufzeitumgebung für die von den Ausführungsumgebungen ausgehenden Systemaufrufe bereit.

Vorteilhaft enthält die Abstraktionsschicht mindestens eine Laufzeitumgebung, die Behandlungsroutinen für die von der Ausführungsumgebung ausgehenden Systemaufrufe unter Verwendung von durch das Betriebssystem bereitgestellten Mitteln implementiert. Analog etwa zu der Laufzeitumgebung "wine", mit der Windows^{®}-Programme unter unixoiden Betriebssystemen lauffähig gemacht werden, können die Ausführungsumgebung und die zugehörige Steuersoftware dann als nativer Prozess unter dem Betriebssystem der SPS laufen, ohne durch einen Hypervisor virtualisiert sein zu müssen. Gegenüber einer Virtualisierung kann dies Systemressourcen der Hardwareplattform einsparen, die stattdessen etwa in die Ausführung von mehr Instanzen der Steuersoftware investiert werden können.

In einer weiteren besonders vorteilhaften Ausgestaltung der Erfindung ist der Ressourcenmanager dazu ausgebildet, in mindestens einer ersten Sandbox nicht genutzte Zuteilungen für den Zugriff auf Arbeitsspeicher, Prozessorleistung und/oder Kommunikationsressourcen an mindestens eine zweite Sandbox umzuverteilen. Dies kann insbesondere dann geschehen, wenn die Ressourcen der zweiten Sandbox überlastet sind oder dies unmittelbar bevorsteht. Auf diese Weise kann der Auslastungsgrad der Hardwareplattform verbessert werden. Insbesondere kann in einem gegebenen Schaltschrankvolumen in der Summe mehr Funktionalität für die Ansteuerung von mehr Feldgeräten untergebracht werden. Nach dem bisherigen Stand der Technik konnte mangelnder Platz in bestehenden Schaltschränken eine spürbare Bremse für den Ausbau des industriellen Steuerungssystems sein. Weiterhin ist der spezifische Energieverbrauch des Steuerungssystems geringer, wenn die Hardware der SPS besser ausgelastet ist. Die Zuteilung kann auch von anderen Parametern, etwa Prioritäten, oder von Heuristiken abhängig gemacht werden.

In einer weiteren besonders vorteilhaften Ausgestaltung der Erfindung ist der Ressourcenmanager dazu ausgebildet, bei einer Knappheit an Arbeitsspeicher, Prozessorleistung und/oder Kommunikationsressourcen nach Regeln in einem Regelwerk die jeweilige Ressource mindestens einer ersten Sandbox ganz oder teilweise zu entziehen und an mindestens eine zweite Sandbox umzuverteilen. Hierhinter steckt der Gedanke, dass, wenn etwa auf Grund eines Hardwareausfalls nicht mehr genügend Ressourcen für den normalen Betrieb der SPS zur Verfügung stehen, die unausweichlichen Betriebseinschränkungen zumindest vorhersehbar sein und ihre Auswirkungen auf die Industrieanlage idealerweise minimiert werden sollten. Lässt sich beispielsweise ein Herunterfahren der Industrieanlage nicht vermeiden, so kann ein entsprechendes Regelwerk beispielsweise sicherstellen, dass das Herunterfahren der einzelnen Anlagenteile in einer für die Industrieanlage insgesamt schonenden Reihenfolge und Weise erfolgt. Beispielsweise sollte in einer evakuierten Anlage zunächst die auf das Vakuum angewiesenen Geräte abgeschaltet werden und dann die Vakuumpumpe. Weiterhin kann es sinnvoll sein, die Bemühungen auf die Aufrechterhaltung des Vakuums konzentrieren und dafür an anderer Stelle mehr Geräte abzuschalten, wenn die Wiederherstellung des Vakuums mit Ausheizen mehrere Tage dauert.

Viele Steuerungssysteme nach dem Stand der Technik strebten im Fehlerfall auch dann noch nach einer vollen Wiederherstellung des Anlagenbetriebs, wenn dies objektiv mit den noch vorhandenen Ressourcen nicht mehr möglich war. Mit dem gemäß der Erfindung vorgesehenen Managementsystem kann eine solche Situation erkannt und das Optimierungsziel auf ein schonendes Abspecken oder Stilllegen des Betriebes ("graceful degradation") geändert werden.

Daher sind in einer weiteren besonders vorteilhaften Ausgestaltung der Erfindung die Regeln in dem Regelwerk entsprechend den Auswirkungen der jeweiligen Entziehung von Ressourcen auf die Industrieanlage als Ganzes gestaffelt. Beispielsweise kann ein vollständiger Stillstand der Anlage möglicherweise vermieden werden, indem nicht zeitkritische Prozesse verlangsamt werden. Die Regelung dieser Prozesse benötigt dann weniger Rechenzeit, die stattdessen für die Regelung zeitkritischer Prozesse zusätzlich zur Verfügung gestellt werden kann.

Nach dem zuvor Gesagten ist das Managementsystem per Software nachrüstbar. Daher bezieht sich die Erfindung auch auf ein Computerprogrammprodukt mit maschinenlesbaren Anweisungen, die, wenn sie auf einem Computer, und/oder auf einer speicherprogrammierbaren Steuerung, ausgeführt werden, den Computer, bzw. die speicherprogrammierbare Steuerung, zu einer speicherprogrammierbaren Steuerung gemäß der Erfindung aufwerten.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
- Figur 1:: Industrieanlage **100** mit SPS **1** gemäß einem ersten nicht beanspruchten Beispiel mit virtuellen Maschinen **81, 82, 83.**
- Figur 2:: Industrieanlage **100** mit SPS **1** gemäß der Erfindung mit Abstraktionsschichten **71, 72, 73.**
- Figur 3:: zum Vergleich SPS **102** gemäß bisherigem Stand der Technik.

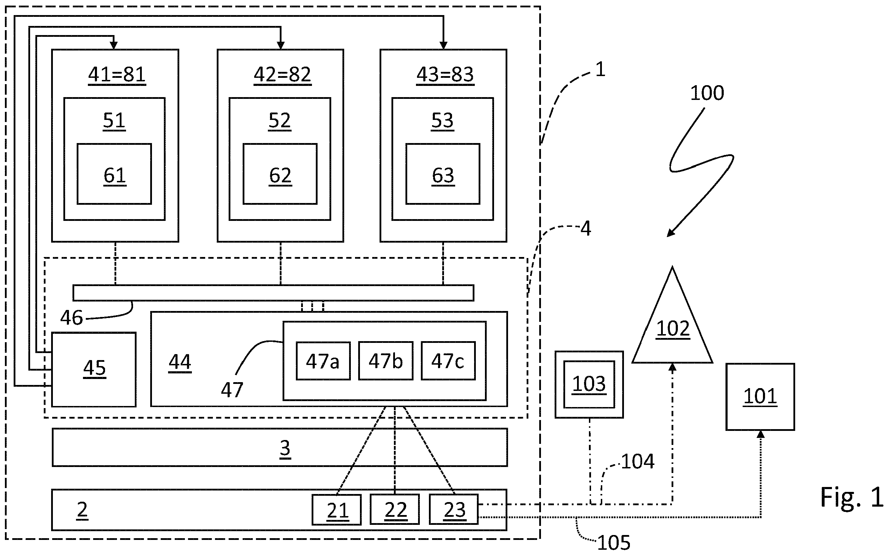

Figur 1 zeigt beispielhaft eine Industrieanlage **100,** in der beispielhaft ein Feldgerät **101** von einer SPS **1** über eine I/O-Schnittstelle **105** angesteuert wird. Zusätzlich ist die SPS **1** in ein Netzwerk **104** eingebunden, das noch eine SPS **102** gemäß dem bisherigen Stand der Technik sowie eine Mensch-Maschine-Schnittstelle **103** enthält.

Die SPS **1** enthält eine Hardwareplattform **2,** die Arbeitsspeicher **21,** Prozessorleistung **22** und eine Kommunikationsschnittstelle **23** für die Verbindung mit dem Netzwerk **104** bereitstellt. Auf der Hardwareplattform **3** läuft das Betriebssystem **2.** Unmittelbar auf dem Betriebssystem **3** läuft die Managementumgebung **4** mit einem Hypervisor **46,** die die drei Sandboxen **41, 42** und **43** in virtuellen Maschinen **81, 82** und **83** startet. In jeder virtuellen Maschine **81, 82** bzw. **83** läuft jeweils eine Ausführungsumgebung **51, 52** bzw. **53.** In jeder Ausführungsumgebung **51, 52** bzw. **53** ist jeweils eine Instanz **61, 62** bzw. **63** der Steuersoftware lauffähig.

Aus den virtuellen Maschinen **81, 82** bzw. **83** heraus kann jeweils nur über den Hypervisor **46** auf das Betriebssystem **3** und die Hardwareressourcen **21, 22** und **23** zugegriffen werden. Dieser Zugriff wird über den Ressourcenmanager **44** reglementiert. Der Ressourcenmanager **44** ist insbesondere dazu ausgebildet, bei Knappheit an Ressourcen **21, 22** bzw. **23** nach Regeln **47a, 47b** und **47c** einer der virtuellen Maschinen **81, 82** bzw. **83** die Ressourcen **21, 22** bzw. **23** ganz oder teilweise zu entziehen, um sie einer anderen virtuellen Maschine **81, 82** bzw. **83** zur Verfügung zu stellen, die sie dringender braucht. Hierzu sind die Regeln **47a, 47b** und **47c** in dem Regelwerk **47** dahingehend sortiert, wie schwerwiegend sich die Entziehung der Ressourcen jeweils auf die Industrieanlage **100** als Ganzes auswirkt. Die Performance der Industrieanlage **100** sinkt also bei Ressourcenknappheit auf ein akzeptables Niveau, statt dass vergeblich versucht wird, den vollen Betrieb aufrechtzuerhalten.

Die Instanzen **61, 62** und 63 der Steuersoftware werden zusätzlich über den Redundanzmanager **45** dahingehend angesteuert, dass sie gegenüber dem Feldgerät **101** die Funktionalität der SPS **1** in redundanter Weise bereitstellen. Dieses weitere Feature ist allein im Redundanzmanager **45** implementiert. Die Ausführungsumgebungen **51, 52** und **53,** sowie die Instanzen **61, 62** und **63,** sind gegenüber einer SPS **1** ohne Managementsystem **4** unverändert.

Somit lässt sich das Managementsystem **4** auch an einer SPS **1** nachrüsten, bei der die Ausführungsumgebung **51, 52** bzw. **53,** und/oder die Steuersoftware **61, 62** bzw. **63,** nur als kompilierter Binärcode vorliegt.

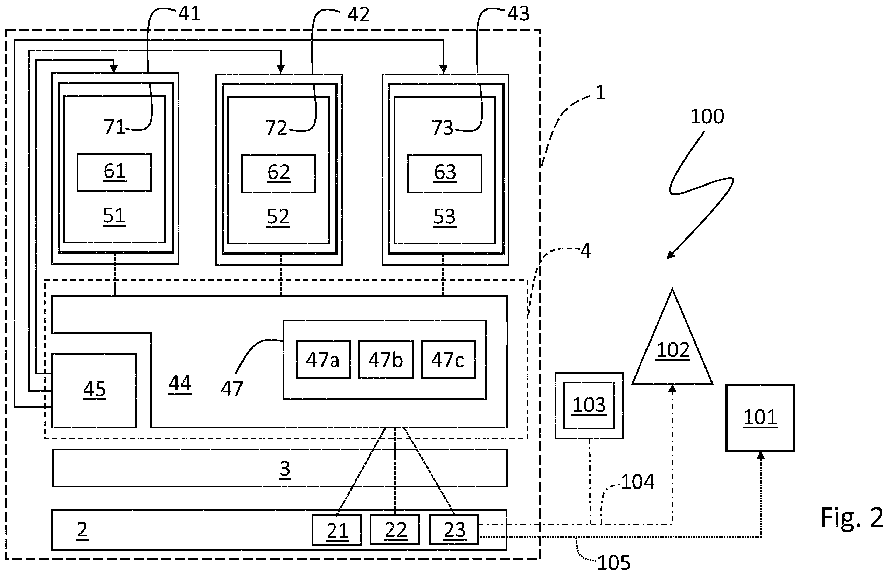

Figur 2 zeigt die gleiche Industrieanlage **100** wie Figur 1, jedoch mit einer SPS **1** gemäß der Erfindung. Im Unterschied zu Figur 1 sind die Sandboxen **41, 42** und **43** nicht als virtuelle Maschinen ausgebildet. Stattdessen laufen die Ausführungsumgebungen **51, 52** und **53** vermittelt durch Abstraktionsschichten **71, 72** bzw. **73** als normale Prozesse auf dem Betriebssystem **3.** Die Abstraktionsschichten **71, 72** bzw. **73** stellen jeweils eine Laufzeitumgebung für die von den Ausführungsumgebungen **51, 52** bzw. **53** ausgehenden Systemaufrufe bereit.

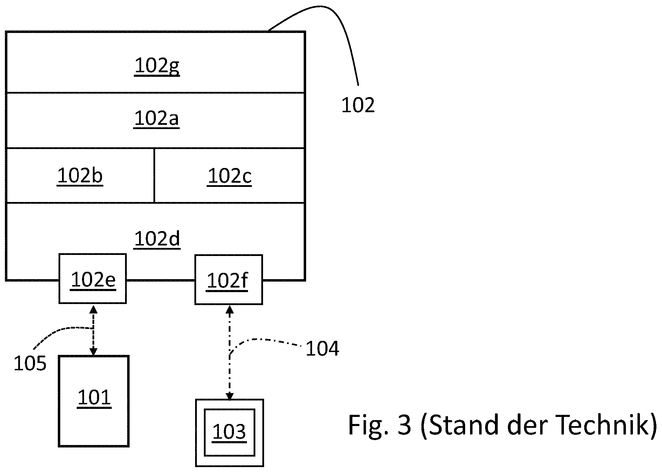

Figur 3 zeigt im Vergleich den Aufbau der SPS **102** gemäß dem bisherigen Stand der Technik und die Anbindung dieser SPS **102** an das Feldgerät **101** und an das Netzwerk **104.** Die Steuersoftware **102g** läuft auf einer Ausführungsumgebung **102a,** die wiederum auf einem Betriebssystem **102b** läuft und sich proprietärer Hardwaretreiber **102c** bedient. Das Betriebssystem **102b** und die Hardwaretreiber **102c** greifen auf die proprietäre Hardware **102d** zu, die ein erstes Interface **102e** für die Kommunikation mit dem Feldgerät **101** über die I/O-Schnittstelle **105** und ein zweites Interface **102f** für die Einbindung in das Netzwerk **104** umfasst.

Im Unterschied zu den Figuren 1 und 2 bauen die verschiedenen Komponenten der SPS **102** aufeinander auf und wirken zusammen, sind aber dabei nicht voneinander abstrahiert und gekapselt. Jede Änderung der Hardware **102d** macht eine Änderung der Hardwaretreiber **102c** erforderlich. Spätestens der Wechsel der Hardware **102d** auf eine neue Hardwarearchitektur macht auch Änderungen am Betriebssystem **102b** notwendig. Die geänderten Hardwaretreiber **102c** machen es notwendig, die Steuersoftware **102g** anzupassen, die auf diese Hardwaretreiber **102c** zugreift. Ein durch den Wechsel der Hardwarearchitektur fälliger Wechsel des Betriebssystems **102b** zieht weitere Änderungen an der Steuersoftware **102g** und der Ausführungsumgebung **102a,** auf der diese Steuersoftware **102g** läuft, nach sich.

### Bezugszeichenliste

- 1: speicherprogrammierbare Steuerung, SPS
- 2: Hardwareplattform der SPS 1
- 21: Arbeitsspeicher der Hardwareplattform 2
- 22: Prozessorleistung der Hardwareplattform 2
- 23: Kommunikationsressourcen der Hardwareplattform 2
- 3: Betriebssystem der SPS 1
- 4: Managementsystem der SPS 1
- 41-43: Sandboxes für Ausführungsumgebungen 51-53
- 44: Ressourcenmanager in Managementsystem 4
- 45: Redundanzmanager in Managementsystem 4
- 46: Hypervisor für virtuelle Maschinen 81-83
- 47: Regelwerk für Umverteilung von Ressourcen 21-23
- 47a-47c: Regeln
- 51-53: Ausführungsumgebungen für Steuersoftware 61-63
- 51'-53': für Paravirtualisierung angepasste Umgebungen 51-53
- 61-63: Steuersoftware
- 61'-63': für Paravirtualisierung angepasste Steuersoftware 61-63
- 71-73: Abstraktionsschichten in Sandboxes 41-43
- 71'-73': für Paravirtualisierung angepasste Abstraktionsschichten 71-73
- 81-83: virtuelle Maschinen als Sandboxes 41-43
- 100: Industrieanlage
- 101: Feldgerät in Industrieanlage 100
- 102: SPS gemäß Stand der Technik
- 102a: Ausführungsumgebung der SPS 102 für Software 102g
- 102b: Betriebssystem der SPS 102
- 102c: proprietäre Hardwaretreiber der SPS 102
- 102d: proprietäre Hardware der SPS 102
- 102e: Interface der SPS 102 für I/O-Schnittstelle 105
- 102f: Interface der SPS 102 zum Netzwerk 104
- 102g: Steuersoftware der SPS 102
- 103: Mensch-Maschine-Schnittstelle der Industrieanlage 100
- 104: Netzwerk der Industrieanlage 100
- 105: I/O-Schnittstelle

## Patentansprüche

1. Speicherprogrammierbare Steuerung (1) für mindestens ein Feldgerät (101) in einer Industrieanlage (100), umfassend eine Hardwareplattform (2), auf der ein Betriebssystem (3) läuft, wobei das Betriebssystem (3) dazu ausgebildet ist, mehrere Ausführungsumgebungen (51-53), innerhalb derer jeweils eine die Steuerlogik der speicherprogrammierbaren Steuerung (1) beinhaltende Steuersoftware (61-63) lauffähig ist, in mindestens einem Prozess auszuführen, wobei ein übergeordnetes Managementsystem (4) vorgesehen ist, welches dazu ausgebildet ist, unmittelbar auf dem Betriebssystem (3) zu laufen und die mehreren Ausführungsumgebungen (51-53) jeweils in einer eigenen Sandbox (41-43) auszuführen, wobei das Managementsystem (4) einen Ressourcenmanager (44) umfasst, der dazu ausgebildet ist, einer jeden Sandbox (41-43) den Zugriff auf Arbeitsspeicher (21), Prozessorleistung (22) und Kommunikationsressourcen (23) der Hardwareplattform (2) zuzuteilen, **dadurch gekennzeichnet, dass** das Managementsystem (4) einen Redundanzmanager (45) aufweist, der dazu ausgebildet ist,
• die im Verhältnis zum Feldgerät (101) vorgesehene Funktionalität der Steuerung (1) aus mehreren, in den Ausführungsumgebungen (51-53) lauffähigen, redundanten Instanzen (61-63) von Steuersoftware abzurufen und bereitzustellen, indem er Dateneingaben vom Feldgerät (101) an mehrere Instanzen (61-63) von Steuersoftware weiterleitet und die daraufhin von diesen Instanzen (61-63) generierten Datenausgaben gegeneinander plausibilisiert, sowie
• die Funktion mehrerer Instanzen (61-63) von Steuersoftware fortlaufend zu überwachen und bei Ausfall oder Fehlfunktion einer Instanz (61-63) diese Instanz (61-63), und/oder ihre Ausführungsumgebung (51-53), neu zu starten,
wobei die inhaltlich verschiedenen Instanzen (61-63) der Steuersoftware, die ein und dieselbe Funktionalität der Steuerung (1) bereitstellen, nach unterschiedlichen Konzepten programmiert sind, wobei die Sandboxen (41-43) nicht als virtuelle Maschinen ausgebildet sind, wobei die Ausführungsumgebungen (51-53) vermittelt durch Abstraktionsschichten (71-73) als normale Prozesse auf dem Betriebssystem (3) laufen, wobei die Abstraktionsschichten (71-73) jeweils eine Laufzeitumgebung für die von den Ausführungsumgebungen (51-53) ausgehenden Systemaufrufe bereitstellen.

2. Speicherprogrammierbare Steuerung (1) nach Anspruch 1, **dadurch gekennzeichnet, dass** der Redundanzmanager (45) dazu ausgebildet ist, in Antwort darauf, dass die Datenausgaben zweier Instanzen (61-63) zumindest in groben Zügen übereinstimmen und die Ausgabe einer dritten Instanz (61-63) hiervon deutlich abweicht, festzustellen, dass die dritte Instanz (61-63) fehlerhaft arbeitet.

3. Speicherprogrammierbare Steuerung (1) nach einem der Ansprüche 1 bis 2, **dadurch gekennzeichnet, dass**
der Redundanzmanager (45) zusätzlich dazu ausgebildet ist, bei Ausfall oder Fehlfunktion einer Instanz (61-63) mindestens eine zusätzliche Instanz (61-63) unter einer zusätzlichen Ausführungsumgebung (51-53) in einer weiteren Sandbox (41-43) zu aktivieren.

4. Speicherprogrammierbare Steuerung (1) nach einem der Ansprüche 1 bis 3, **dadurch gekennzeichnet, dass**
der Redundanzmanager (45) dazu ausgebildet ist, die Kommunikation mehrerer Instanzen (61-63) von Steuersoftware mit dem Feldgerät (101) nach einem Rundlaufverfahren zu steuern.

5. Speicherprogrammierbare Steuerung (1) nach einem der Ansprüche 1 bis 4, **dadurch gekennzeichnet, dass**
zur Bereitstellung ein und derselben Funktionalität der Steuerung (1) zwei inhaltlich verschiedene Ausführungsumgebungen (51-53) vorgesehen sind.

6. Speicherprogrammierbare Steuerung (1) nach einem der Ansprüche 1 bis 5, **dadurch gekennzeichnet, dass**
die Abstraktionsschicht (71-73) mindestens eine Laufzeitumgebung enthält, die Behandlungsroutinen für die von der Ausführungsumgebung (51-53) ausgehenden Systemaufrufe unter Verwendung von durch das Betriebssystem (3) bereitgestellten Mitteln implementiert.

7. Speicherprogrammierbare Steuerung (1) nach einem der Ansprüche 1 bis 6,
**dadurch gekennzeichnet, dass**
das Managementsystem (4) ausgebildet ist, mit Virtualisierungsfunktionen des Betriebssystems (3) für jede Sandbox (41-43) eine eigene Userspace-Instanz zu erzeugen.

8. Speicherprogrammierbare Steuerung (1) nach einem der Ansprüche 1 bis 7,
**dadurch gekennzeichnet, dass**
der Ressourcenmanager (44) dazu ausgebildet ist, in mindestens einer ersten Sandbox (41-43) nicht genutzte Zuteilungen für den Zugriff auf Arbeitsspeicher (21), Prozessorleistung (22) und/oder Kommunikationsressourcen (23) an mindestens eine zweite Sandbox (41-43) umzuverteilen.

9. Speicherprogrammierbare Steuerung (1) nach einem der Ansprüche 1 bis 8,
**dadurch gekennzeichnet, dass**
der Ressourcenmanager (44) dazu ausgebildet ist, bei einer Knappheit an Arbeitsspeicher (21), Prozessorleistung (22) und/oder Kommunikationsressourcen (23) nach Regeln (47a-47c) in einem Regelwerk (47) die jeweilige Ressource (21-23) mindestens einer ersten Sandbox (41-43) ganz oder teilweise zu entziehen und an mindestens eine zweite Sandbox (41-43) umzuverteilen.

10. Speicherprogrammierbare Steuerung (1) nach Anspruch 9,
**dadurch gekennzeichnet, dass**
die Regeln (47a-47c) in dem Regelwerk entsprechend den Auswirkungen der jeweiligen Entziehung von Ressourcen (21-23) auf die Industrieanlage (100) als Ganzes gestaffelt sind.

11. Computerprogrammprodukt, enthaltend maschinenlesbare Anweisungen, die, wenn sie auf einem Computer, und/oder auf einer speicherprogrammierbaren Steuerung (1), ausgeführt werden, den Computer, bzw. die speicherprogrammierbare Steuerung, zu einer speicherprogrammierbaren Steuerung (1) nach einem der Ansprüche 1-9 aufwerten.

## Claims

1. A programmable logic controller (1) for at least one field device (101) in an industrial plant (100), comprising a hardware platform (2) on which an operating system (3) runs, wherein the operating system (3) is configured to execute, in at least one process, multiple execution environments (51-53), in each of which a control software (61-63) comprising the control logic of the programmable logic controller (1) is executable, wherein a superordinate management system (4) is provided that is configured to run directly on the operating system (3) and execute each of the multiple execution environments (51-53) in a respective own sandbox (41-43), wherein the management system (4) comprises a resource manager (44) that is configured to allocate, to each sandbox (41-43), access to memory (21), processing power (22) and communication resources (23) of the hardware platform (2), **characterized in that** the management system (4) comprises a redundancy manager (45) that is configured to:
• retrieve and provide the functionality of the controller (1) intended in relation to the field device (101) from multiple redundant instances (61-63) of control software executable in the execution environments (51-53), by forwarding data inputs from the field device (101) to multiple instances (61-63) of control software and plausibilizing the data outputs then generated by these instances (61-63) against each other, as well as to:
• continuously monitor the functioning of multiple instances (61-63) of control software and, in case of failure or malfunction of an instance (61-63), restart this instance (61-63), and/or its execution environment (51-53),
wherein the instances (61-63) of the control software that differ in content and provide one and the same functionality of the controller (1) are programmed according to different concepts, wherein the sandboxes (41-43) are not configured as virtual machines, wherein the execution environments (51-53) run, mediated by abstraction layers (71-73), as normal processes on the operating system (3), wherein the abstraction layers (71-73) each provide a run-time environment for system calls originating from the execution environments (51-53).

2. The programmable logic controller (1) of claim 1, **characterized in that** the redundancy manager (45) is configured to, in response to the data outputs of at least two instances (61-63) matching at least along general lines and output of a third instance (61-63) differing substantially therefrom, determining that the third instance (61-63) works faultily.

3. The programmable logic controller (1) of any one of claims 1 to 2, **characterized in that**
the redundancy manager (45) is further configured to activate, in case of failure or malfunction of an instance (61-63), at least one additional instance (61-63) under an additional execution environment (51-53) in a further sandbox (41-43).

4. The programmable logic controller (1) of any one of claims 1 to 3, **characterized in that**
the redundancy manager (45) is configured to control the communication of multiple instances (61-63) of control software with the field device (101) according to a round-robin procedure.

5. The programmable logic controller (1) of any one of claims 1 to 4, **characterized in that**
two execution environments (51-53) that differ with respect to content are set up for providing one and the same functionality of the programmable logic controller (1).

6. The programmable logic controller (1) of any one of claims 1 to 5,
**characterized in that**
the abstraction layer (71-73) comprises at least one run-time environment that implements handling routines for system calls originating from the execution environment (51-53), using means provided by the operating system (3).

7. The programmable logic controller (1) of any one of claims 1 to 6, **characterized in that**
the management system (4) is configured to create, using virtualization functions of the operating system (3), an own userspace instance for each sandbox (41-43).

8. The programmable logic controller (1) of any one of claims 1 to 7, **characterized in that**
the resource manager (44) is configured to redistribute allocations for access to memory (21), processing power (22) and communication resources (23) that are not used in at least one first sandbox (41-43) to at least one second sandbox (41-43).

9. The programmable logic controller (1) of any one of claims 1 to 8, **characterized in that**
the resource manager (44) is configured to, in case of a shortage of memory (21), processing power (22) and/or communication resources (23), according to rules (47a-47c) in a rule set (47), withdrawing the respective resource (21-23) wholly or partially from at least one first sandbox (41-43) and redistributing it to at least one second sandbox (41-43).

10. The programmable logic controller (1) of claim 9,
**characterized in that**
the rules (47a-47c) in the rule set are staggered according to the impact of the respective withdrawal of resources (21-23) onto the industrial plant (100) as a whole.

11. A computer program product, comprising machine-readable instructions that, when executed on a computer, and/or on a programmable logic controller (1), upgrade the computer, and/or the programmable logic controller, to a programmable logic controller (1) according to any one of claims 1-9.

## Revendications

1. Automate programmable industriel (1) pour au moins un appareil de terrain (101) dans une installation industrielle (100), comprenant une plate-forme matérielle (2) sur laquelle fonctionne un système d'exploitation (3), le système d'exploitation (3) étant configuré pour exécuter, dans au moins un processus, plusieurs environnements d'exécution (51-53) à l'intérieur desquels peut respectivement fonctionner un logiciel de commande (61-63) contenant la logique de commande de l'automate programmable industriel (1), un système de gestion (4) de niveau supérieur étant présent, lequel est configuré pour fonctionner directement sur le système d'exploitation (3) et exécuter les plusieurs environnements d'exécution (51-53) respectivement dans un bac à sable (41-43) propre, le système de gestion (4) comportant un gestionnaire de ressources (44), lequel est configuré pour attribuer à chaque bac à sable (41-43) l'accès à une mémoire de travail (21), une puissance de processeur (22) et des ressources de communication (23) de la plate-forme matérielle (2), **caractérisé en ce que** le système de gestion (4) possède un gestionnaire de redondance qui est configuré pour
* invoquer et mettre à disposition la fonctionnalité de l'automate (1) prévue en relation avec l'appareil de terrain (101) à partir de plusieurs instances (61-63) redondantes de logiciel de commande pouvant fonctionner dans les environnements d'exécution (51-53), en retransmettant des entrées de données de l'appareil de terrain (101) à plusieurs instances (61-63) de logiciels de commande et en vérifiant la plausibilité mutuelle des sorties de données ensuite générées par ces instances (61-63), ainsi que pour
* surveiller continuellement la fonction de plusieurs instances (61-63) de logiciels de commande et, en cas de panne ou de dysfonctionnement d'une instance (61-63), redémarrer cette instance (61-63) et/ou son environnement d'exécution (51-53),
les instances (61-63) aux contenus différents du logiciel de commande, qui mettent à disposition de l'automate (1) une et la même fonctionnalité, étant programmées selon des concepts différents, les bacs à sable (41-43) n'étant pas réalisés sous la forme de machines virtuelles, les environnements d'exécution (51-53) fonctionnant par l'intermédiaire de couches d'abstraction (71-73) comme des processus normaux sur le système d'exploitation, les couches d'abstraction (71-73) mettant respectivement à disposition un environnement d'exécutable pour les invocations du système émanant des environnements d'exécution (51-53).

2. Automate programmable industriel (1) selon la revendication 1, **caractérisé en ce que** le gestionnaire de redondance (45) est configuré pour, en réponse au fait que les sorties de données de deux instances (61-63) coïncident au moins dans les grandes lignes et la sortie d'une troisième instance (61-63) s'en écart fortement, constater que la troisième instance (61-63) fonctionne de manière erronée.

3. Automate programmable industriel (1) selon l'une des revendications 1 à 2, **caractérisé en ce que** le gestionnaire de redondance (45) est en plus configuré pour, en cas de panne ou de dysfonctionnement d'une instance (61-63), activer au moins une instance (61-63) supplémentaire sous un environnement d'exécution (51-53) supplémentaire dans un autre bac à sable (41-43).

4. Automate programmable industriel (1) selon l'une des revendications 1 à 3, **caractérisé en ce que** le gestionnaire de redondance (45) est configuré pour commander la communication de plusieurs instances (61-63) de logiciels de commande avec l'appareil de terrain (101) selon un procédé à séquence périodique.

5. Automate programmable industriel (1) selon l'une des revendications 1 à 4, **caractérisé en ce que** deux environnements d'exécution (51-53) aux contenus différents sont présents pour la mise à disposition de l'automate (1) de l'une et la même fonctionnalité.

6. Automate programmable industriel (1) selon l'une des revendications 1 à 5, **caractérisé en ce que** la couche d'abstraction (71-73) contient au moins un environnement d'exécutable qui met en œuvre les routines de traitement pour les invocations du système émanant de l'environnement d'exécution (51-53) en utilisant des moyens mis à disposition par le système d'exploitation (3) .

7. Automate programmable industriel (1) selon l'une des revendications 1 à 6, **caractérisé en ce que** le système de gestion (4) est configuré pour générer, avec des fonctions de virtualisation du système d'exploitation (3), une instance d'espace d'utilisateur propre prou chaque bac à sable (41-43) .

8. Automate programmable industriel (1) selon l'une des revendications 1 à 7, **caractérisé en ce que** le gestionnaire de ressources (44) est configuré pour réattribuer à au moins un deuxième bac à sable (41-43) les attributions non utilisées dans au moins un premier bac à sable (41-43) pour l'accès à une mémoire de travail (21), une puissance de processeur (22) et/ou des ressources de communication (23).

9. Automate programmable industriel (1) selon l'une des revendications 1 à 8, **caractérisé en ce que** le gestionnaire de ressources (44) est configuré pour, dans le cas d'une pénurie de mémoire de travail (21), de puissance de processeur (22) et/ou de ressources de communication (23), retirer entièrement ou partiellement la ressource (21-23) respective à au moins un premier bac à sable (41-43) et la réattribuer à au moins un deuxième bac à sable (41-43) conformément à des règles (47a-47c) dans un ensemble de règles (47).

10. Automate programmable industriel (1) selon l'une des revendications 1 à 9, **caractérisé en ce que** les règles (47a-47c) dans l'ensemble de règles sont échelonnées en fonction des effets du retrait respectif des ressources (21-23) sur l'installation industrielle (100) dans son ensemble.

11. Produit de programme informatique, contenant des instructions lisibles par machine qui, lorsqu'elles sont exécutées sur un ordinateur et/ou sur un automate programmable industriel (1), revalorisent l'ordinateur ou l'automate programmable industriel à un automate programmable industriel (1) selon l'une des revendications 1 à 9.
